# EUROPEAN PATENT SPECIFICATION

(11) **EP 4 223 389 B1**
(45) Date of publication and mention of the grant of the patent: **14.08.2024**
(21) Application number: 23154612.8
(22) Date of filing: 02.02.2023
(51) Int. Cl.: B01D 46/10, B01D 46/42, B01D 46/52

(54) **FILTERING ELEMENT WITH EXTRACTION HANDLE**
FILTERELEMENT MIT GRIFF
ÉLÉMENT FILTRANT À POIGNÉE

(30) Priority: 04.02.2022 IT 202200001976
(43) Date of publication of application: 09.08.2023
(73) Proprietor: DENSO THERMAL SYSTEMS S.p.A., 10046 Poirino (Torino) (IT)
(72) Inventor: GIGLIOTTI, Paolo, 10046 POIRINO (Torino) (IT); CREPALDI, Luca, 10046 POIRINO (Torino) (IT)
(74) Representative: Vanzini, Christian

(56) References cited:
- EP-A1- 1 944 072
- CN-U- 212 790 189
- DE-A1- 102009 019 859
- DE-A1- 4 117 550
- JP-A- 2002 166 113
- US-A1- 2017 182 445

## Description

The present invention relates to a filtering element comprising a zigzag-folded filtering web ending at opposite ends thereof with respective end flaps, and opposing side bands joined to the filtering web.

Filtering elements formed by a zigzag-folded filtering web and made in particular of nonwoven fabric are produced for a wide range of applications. For example, such filtering elements are used to filter fresh air for the passenger compartment of motor vehicles or in air conditioning systems for indoor spaces. In motor vehicles, filtering elements of this type are inserted into housings such as frames or boxes. Such an air filter comprising gripping members is disclosed in EP 1944072.

One object of the present invention is to make available a solution that allows the filtering element to be easily removed from its housing at the end of its life.

In view of this object, a subject of the invention is a filtering element of the type defined at the outset, further comprising a sheet element made of a plastics material superimposed to one of the end flaps, said sheet element comprising a base portion fixed to the particular end flap and a handle portion connected to the base portion by a film hinge extending along a direction parallel to the folding lines of the filtering web, said handle portion being thereby foldable from an inactive position, in which the handle portion is substantially coplanar with the base portion, to a use position, in which the handle portion is raised relative to the base portion and to the particular end flap.

The handle portion may thus be lifted manually at the end of the filtering element's life, facilitating the extraction of the filtering element from its housing.

Preferably, the sheet element further comprises a fastening portion connected to the base portion by an elastic loop, in such a way that the sheet element is clipped to the particular end flap at an edge thereof. This arrangement allows easy assembly of the portion to the handle on the filtering element, without the use of additional means such as adhesives.

In general, at least one gripping aperture is formed through the handle portion. This makes it easier to grip the handle portion and thus extract the filter from the housing thereof.

Preferably, at least one hook projection is formed on the handle portion at the film hinge, said hook projection being configured to bite onto the end flap when the handle portion is in the use position. This arrangement ensures, in cooperation with the clip fastening, effective retention of the filtering element as it is removed from its housing. In particular, the hook projection extends from the handle portion to beyond the film hinge.

Preferably, an insert made of elastomeric material is obtained frontally on the base portion. In use, this arrangement makes it possible on the one hand to seal the perimeter of the filtering element to the passage of air, and on the other hand to avoid noise between the plastics of the filtering element and the particular housing. In particular, the insert partially extends into the elastic loop between the base portion and the fastening portion.

Other features and advantages of the filtering element according to the invention will become clearer from the following detailed description of an embodiment of the invention, made with reference to the accompanying drawings, provided purely for illustrative and non-limiting purposes, in which:
Fig. 1 and 2 are perspective views of a filtering element with a handle portion according to the invention, in an inactive position and in a use position, respectively;
Fig. 3 is another perspective view of the filtering element with the handle portion in the use position; and
Fig. 4 and 5 are dissected views still showing the handle portion in the inactive position and in the use position.

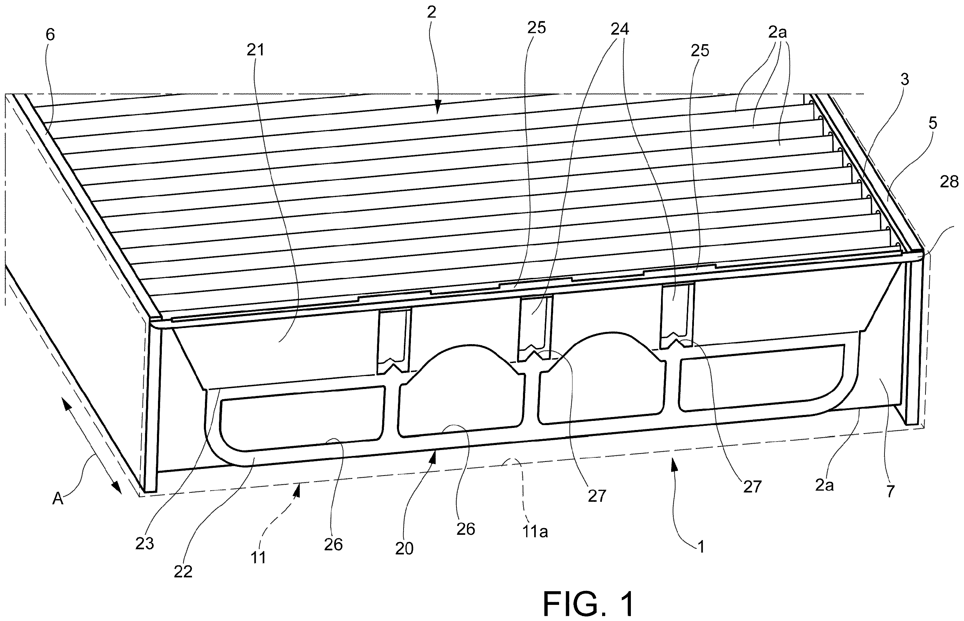

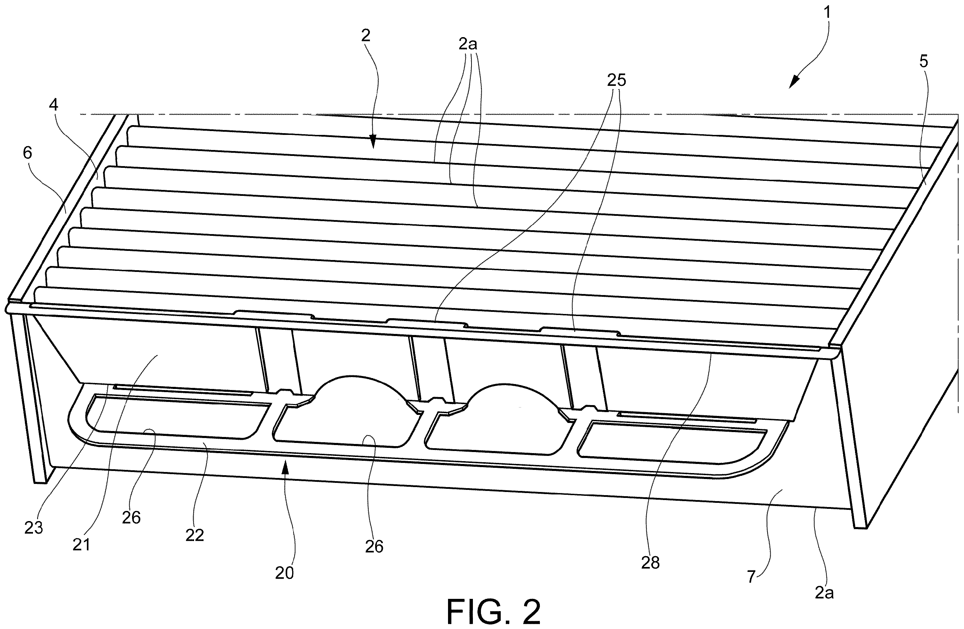

Fig. 1 and 2 show a filtering element 1 comprising a zigzag-folded filtering web 2. The filtering element 1 has a substantially plate-like shape and further comprises two opposing side bands 3 and 4, made of the same material as the filtering web 2 and joined thereto. The material of the filtering element may comprise, for example, a nonwoven fabric and may comprise a single layer or several layers coupled together. In the example shown, respective reinforcing side bands 5, 6 of plastics material are in turn fixed to the two side bands 3, 4.

The configuration of the side bands is not however essential for the purposes of the invention. According to alternative embodiments, the reinforcing side bands 5, 6 may be absent, or the side bands 3, 4 made of the same material as the filtering web 2 may be absent.

At its opposite ends, the filtering web 2 comprises two respective end flaps, which delimit the filtering web 2 in the longitudinal direction. Only one of these end flaps is visible in the figures and is indicated by 7. For the purposes of the present description, "longitudinal direction" means the direction orthogonal to the folding lines 2a of the filtering web 2. The end flap 7 ends with a relevant end edge 7a, extending approximately parallel to the folding lines 2a. On the opposite side, the end flap 7 is connected to the rest of the filtering web 2 at one of the folding lines 2a.

Fig. 1 also shows schematically, with a dotted line, a filter housing 11 suitable for receiving the filtering element 1. The filter housing 11 may be, for example, a frame or a box, and is configured to allow a flow of fluid, e.g., air, to pass through the filtering element 1 according to a direction approximately orthogonal to a plane in which the folding lines 2a lie.

The filter housing 11 defines an inlet 11a that allows the insertion or the extraction of the filtering element 1 according to the direction of the arrow A shown in Fig. 1, parallel to the "longitudinal direction" defined above. The inlet 11a is suitable for being closed by a cover (not shown) which, when the filtering element 1 is inserted into the filter housing 11, is positioned opposite to the end flap 7.

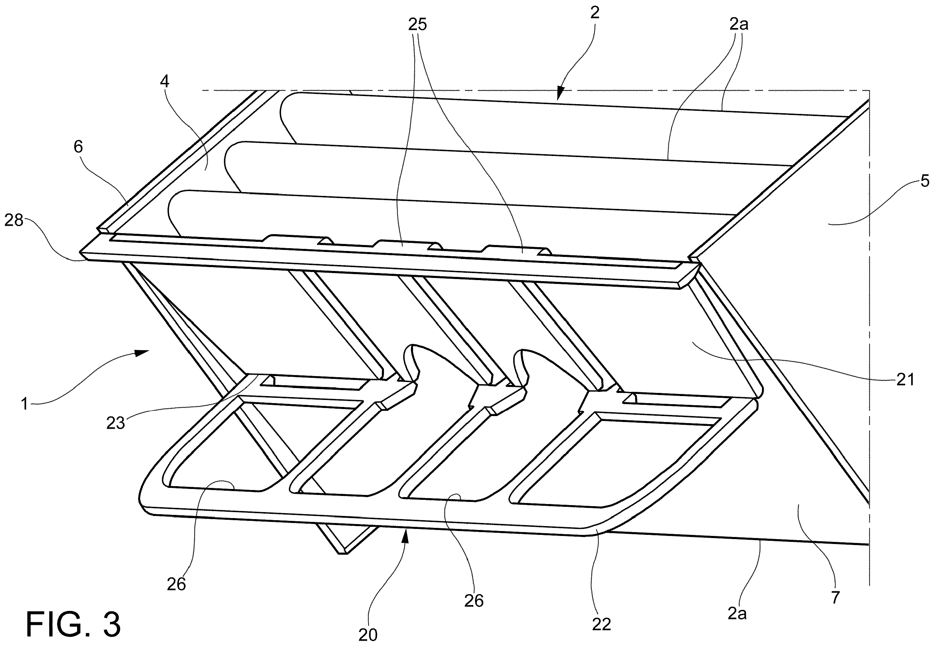

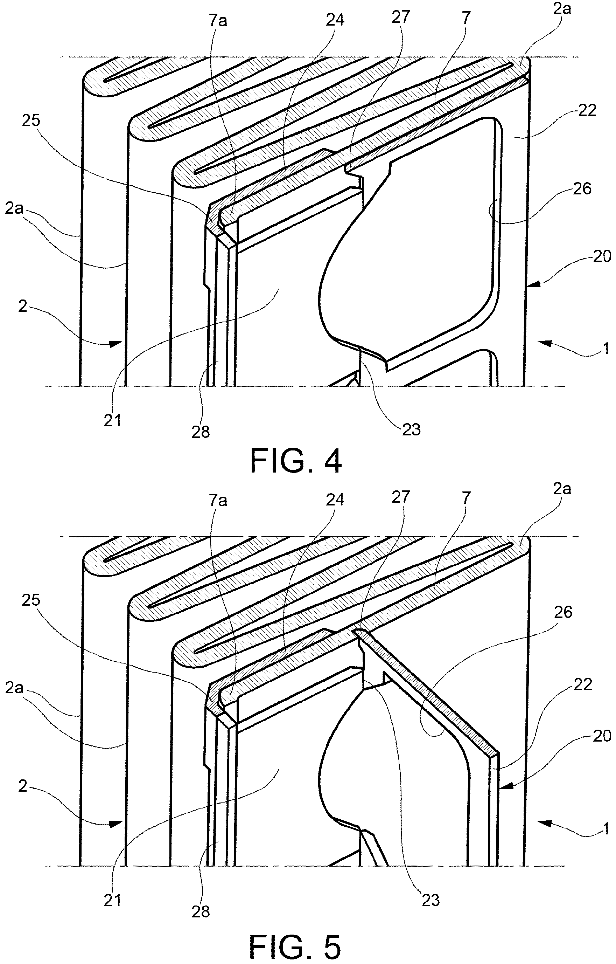

As may also be seen in Fig. 3 to 5, the filtering element 1 further comprises a sheet element 20 of plastics material superimposed to the end flap 7. The sheet element 20 comprising a base portion 21 fixed to the end flap 7 and a handle portion 22 connected to the base portion 21 by a film hinge 23. The film hinge 23 extends along a direction parallel to the folding lines 2a of the filtering web 2. Thus, the handle portion 22 of the sheet element 20 is foldable from an inactive position (shown in Fig. 1 and 4), in which the handle portion 22 is substantially coplanar with the base portion 21, to a use position (shown in Fig. 2, 3 and 5), in which the handle portion 22 is raised relative to the base portion 21, and to the particular end flap 7. In other words, in the inactive position the handle portion 22 rests or is lying on the end flap, while in the use position the handle portion 22 is substantially upright, forming a certain angle with the base portion 21, in particular of approximately 90°.

The sheet element 20 further comprises a fastening portion 24 connected to the base portion by an elastic loop 25, in such a way that the sheet element 20 is clipped to the end flap 7 at the free edge 7a of the flap. In other words, the base portion 21 and the fastening portion 24 press on opposite faces of the end flap by exerting an elastic retaining force that holds the sheet element 20 on the end flap 7. The elastic loop 25 of the sheet element 20 is arranged astride the free edge 7a of the end flap 7. In this manner, the sheet element 20 may be easily press-fitted onto the end flap 7 without requiring the use of additional devices, such as, for example, adhesives. Note that in Fig. 1 the filtering web 2 and especially the end flap 7 are shown as transparent so that the fastening portion 24 of the sheet element 20 is visible.

To facilitate the handling and thus the extraction of the filtering element 1 from the filter housing 11, at least one gripping aperture 26 is formed through the handle portion 22.

As may be seen in particular in Fig. 4 and 5, at least one hook projection 27 is made on the handle portion 22 at the film hinge 23. The hook projection 27 is configured to bite onto the end flap 7 when the handle portion 22 of the sheet element 20 is in the use position. To this end, the hook projection 27 extends from the handle portion 22 to beyond the film hinge. When the handle portion 22 is rotated from the inactive position to the use position, the hook projection 27 thus interferes with a surface of the end flap 7, penetrating into the material of which it is made. This exerts an effective biting action on the end flap 7 that prevents the sheet element 20 from inadvertently slipping off the flap when the handle portion 22 is pulled to extract the filtering element 1 out of the filter housing 11.

An insert 28 made of elastomeric material is obtained frontally on the base portion 21 of the sheet element 20. The insert 28 extends for a length substantially equal to the width of the filtering element 1. As may be seen in Fig. 5, the insert 28 further extends partially into the elastic loop 21 between the base portion 21 and the fastening portion 24 of the sheet element 20. When the inlet 11a of the filter housing 11 is closed with a cover, this cover compresses the insert 28, which acts as a gasket to seal the perimeter of the filtering element 1 against the filter housing 11. Furthermore, the insert 28 prevents noise between the plastics of the filtering element and the particular housing thereof.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. A filtering element (1) comprising
a zigzag-folded filtering web (2) ending at opposite ends thereof with respective end flaps (7), and
opposing side bands (3, 5; 4, 6) joined to the filtering web (2),
**characterized by** further comprising a sheet element (20) of plastics material superimposed to one of the end flaps (7), said sheet element comprising a base portion (21) fixed to the particular end flap (7) and a handle portion (22) connected to the base portion (21) by a film hinge (23) extending along a direction parallel to folding lines (2a) of the filtering web (2), said handle portion being thereby foldable from an inactive position, in which the handle portion (22) is substantially coplanar with the base portion (21), to a use position, in which the handle portion (22) is raised relative to the base portion (21) and to the particular end flap (7).

2. The filtering element according to claim 1, wherein the sheet element (20) further comprises a fastening portion (24) connected to the base portion (21) by an elastic loop (25), in such a way that the sheet element (20) is clipped to the particular end flap (7) at an edge (7a) thereof.

3. The filtering element according to claim 2, wherein said edge (7a) delimits the particular end flap (7) on a side thereof opposite to one of the folding lines (2a) of the filtering web (2).

4. The filtering element according to any of the preceding claims, wherein at least one gripping aperture (26) is formed through the handle portion (22).

5. The filtering element according to any of the preceding claims, wherein at least one hook projection (27) is formed on the handle portion (22) at the film hinge (23), said hook projection being configured to bite onto the particular end flap (7) when the handle portion (22) is in the use position.

6. The filtering element according to claim 5, wherein the hook projection (27) extends from the handle portion (22) to beyond the film hinge (23).

7. The filtering element according to any of the preceding claims, wherein an insert (28) of elastomeric material is formed frontally on the base portion (21).

8. The filtering element according to claim 7 in combination with claim 2, wherein the insert (28) partially extends into the elastic loop (25) between the base portion (21) and the fastening portion (24).

## Patentansprüche

1. Filterelement (1), aufweisend
eine zickzackförmig gefaltete Filterschicht (2), die an ihren entgegengesetzten Enden mit jeweiligen Endlaschen (7) abschließt, und
einander gegenüberliegende Seitenstreifen (3, 5; 4, 6), die mit der Filterschicht (2) verbunden sind,
**dadurch gekennzeichnet, dass** es weiter ein Folienelement (20) aus Kunststoffmaterial aufweist, welches auf eine der Endlaschen (7) aufgebracht ist, wobei das Folienelement einen Basisabschnitt (21), welcher an die jeweilige Endlasche (7) angebracht ist, und ein Griffteil (22) aufweist, welches durch ein Filmscharnier (23), das sich entlang einer parallel zu den Faltlinien (2a) der Filterschicht (2) verlaufenden Richtung erstreckt, mit dem Basisabschnitt (21) verbunden ist, wobei das Griffteil dadurch von einer inaktiven Stellung, in welcher das Griffteil (22) im Wesentlichen koplanar mit dem Basisabschnitt (21) ist, in eine Gebrauchsstellung umklappbar ist, in welcher das Griffteil (22) bezüglich dem Basisabschnitt (21) und der jeweiligen Endlasche (7) angehoben wird.

2. Filterelement nach Anspruch 1, wobei das Folienelement (20) weiter einen Befestigungsabschnitt (24) aufweist, der durch eine elastische Schlaufe (25) derart mit dem Basisabschnitt (21) verbunden ist, dass das Folienelement (20) an die jeweilige Endlasche (7) an einen ihrer Ränder (7a) angehängt ist.

3. Filterelement nach Anspruch 2, wobei der Rand (7a) die jeweilige Endlasche (7) auf einer ihrer Seiten, die einer der Faltlinien (2a) der Filterschicht (2) entgegengesetzt ist, begrenzt.

4. Filterelement nach einem der vorangehenden Ansprüche, wobei mindestens eine Greiföffnung (26) durch das Griffteil (22) hindurch ausgebildet ist.

5. Filterelement nach einem der vorangehenden Ansprüche, wobei mindestens ein Hakenvorsprung (27) am Griffteil (22) an dem Filmscharnier (23) ausgebildet ist, wobei der Hakenvorsprung dazu ausgelegt ist, in die jeweilige Endlasche (7) einzugreifen, wenn das Griffteil (22) in der Gebrauchsstellung ist.

6. Filterelement nach Anspruch 5, wobei der Hakenvorsprung (27) sich von dem Griffteil (22) über das Filmscharnier (23) hinaus erstreckt.

7. Filterelement nach einem der vorangehenden Ansprüche, wobei ein Einsatz (28) aus elastomerem Material frontal an dem Basisabschnitt (21) ausgebildet ist.

8. Filterelement nach Anspruch 7 in Kombination mit Anspruch 2, wobei der Einsatz (28) sich teilweise in die elastische Schlaufe (25) zwischen dem Basisabschnitt (21) und dem Befestigungsabschnitt (24) hinein erstreckt.

## Revendications

1. Élément filtrant (1) comprenant
une bande de filtration pliée en zigzag (2) se terminant à des extrémités opposées de celui-ci avec des rabats d'extrémité respectifs (7), et
des bandes latérales opposées (3, 5 ; 4, 6) assemblées à la bande filtrante (2),
**caractérisé en ce qu'**il comprend en outre un élément en feuille (20) en matière plastique superposé à l'un des rabats d'extrémité (7), ledit élément en feuille comprenant une partie de base (21) fixée au rabat d'extrémité particulier (7) et une partie poignée (22) raccordée à la partie de base (21) par une charnière de film (23) s'étendant le long d'une direction parallèle à des lignes de pliage (2a) de la bande filtrante (2), ladite partie poignée étant ainsi pliable depuis une position inactive, dans laquelle la partie poignée (22) est sensiblement coplanaire avec la partie de base (21), vers une position d'utilisation, dans laquelle la partie poignée (22) est élevée par rapport à la partie de base (21) et au rabat d'extrémité particulier (7).

2. Élément filtrant selon la revendication 1, dans lequel l'élément en feuille (20) comprend en outre une partie de fixation (24) raccordée à la partie de base (21) par une boucle élastique (25), de sorte que l'élément en feuille (20) soit attaché sur le rabat d'extrémité particulier (7) à un bord (7a) de celui-ci.

3. Élément filtrant selon la revendication 2, dans lequel ledit bord (7a) délimite le rabat d'extrémité particulier (7) sur un côté de celui-ci opposé à l'une des lignes de pliage (2a) de la bande filtrante (2).

4. Élément filtrant selon l'une quelconque des revendications précédentes, dans lequel au moins une ouverture de préhension (26) est formée à travers la partie poignée (22).

5. Élément filtrant selon l'une quelconque des revendications précédentes, dans lequel au moins une saillie de crochet (27) est formée sur la partie poignée (22) à la charnière de film (23), ladite saillie de crochet étant configurée pour s'accrocher au rabat d'extrémité particulier (7) lorsque la partie poignée (22) est dans la position d'utilisation.

6. Élément filtrant selon la revendication 5, dans lequel la saillie de crochet (27) s'étend depuis la partie poignée (22) au-delà de la charnière de film (23).

7. Élément filtrant selon l'une quelconque des revendications précédentes, dans lequel un insert (28) de matériau élastomère est formé frontalement sur la partie de base (21).

8. Élément filtrant selon la revendication 7 en combinaison avec la revendication 2, dans lequel l'insert (28) s'étend partiellement jusque dans la boucle élastique (25) entre la partie de base (21) et la partie de fixation (24).
